Europäisches Patentamt

**European Patent Office**

Office européen des brevets

(19)

(11) Publication number: **0 200 288**
A2

(12)

# EUROPEAN PATENT APPLICATION

(21) Application number: 86300643.3

(22) Date of filing: 30.01.86

(51) Int. Cl.⁴: **A 01 N 25/26**
A 01 N 25/34, C 05 G 3/02
C 05 G 5/00

(30) Priority: 19.04.85 US 725046

(43) Date of publication of application:
05.11.86 Bulletin 86/45

(84) Designated Contracting States:
AT BE CH DE FR GB IT LI LU NL SE

(71) Applicant: INTERNATIONAL SPIKE, INC.
817 East Third Street
Lexington, KY 40505(US)

(72) Inventor: Amburgey, William
1750 17th Street
Paris Kentucky 40361(US)

(74) Representative: Allard, Susan Joyce et al,
BOULT, WADE & TENNANT 27 Furnival street
London EC4A 1PQ(GB)

(54) Controlled release insecticide.

(57) A process for treating carrier granules containing a liquid pesticide to make them useful in preparing a pesticide spike which can be driven into the ground. The process comprises mixing the ganular carrier containing an absorbed pesticide with a hardener to produce coated granules, initiating curing of the hardener, and allowing the hardener to harden so as to produce hardened, coated granules. In the preferred embodiment, disulfoton pesticide is absorbed on an attupulgite-type clay. A urea formaldehyde resinous hardener is used and a suitable curing catalyst is included. The granules are formed into a spike-shaped briquette by conventional briquetting techniques. Fertilizer may be mixed with the granules before briquetting to form a pesticide-fertilizer spike.

Croydon Printing Company Ltd.

EP 0 200 288 A2

## CONTROLLED RELEASE INSECTICIDE

This invention relates to insecticide spikes capable of being driven into the ground and to insecticide-carrying granules useful as an ingredient in preparing such insecticide spikes.

Plant growers have always had to face a problem of pests destroying their plants. To combat this problem a number of pesticides have been developed including systemic pesticides. As used herein the term "pesticide" includes insecticides, fungicides, herbicides, nematocides and bactericides. A systemic pesticide is one which is absorbed by a plant through its root system into the sap and carried with the same to the leaves.

Insects and other pests which come in contact with the surface of the plant or feed on it ingest the pesticide from the sap and are poisoned. Over the years, various approaches have been devised to supply systemic pesticides to the plants. An advantageous approach is to supply the pesticide to plants at a controlled rate. One way to accomplish a controlled rate of supplying the pesticide is to incorporate the pesticide in a spike that can be driven into the ground. The materials in the spike are gradually leached out by the surface water into the ground where they can be absorbed by the roots of the plants.

The use of liquid pesticides to make controlled release spikes presents significant problems. The pesticide incorporated into a spike migrates quickly to the surface of the spike. This creates toxicity problems to users and makes handling of the spikes difficult. The migration of the pesticide also results in a rapid discharge of the pesticide rather than the desired gradual controlled release.

The migration problem can be somewhat reduced by absorbing the liquid pesticide into a solid carrier such as clay. This slows the migration of the pesticide to the surface of the spike. However, this approach does not alleviate the surface toxicity problems. Additionally, the presence of the clay in the composition weakens the structural integrity of the spikes so that spikes having acceptable structural integrity cannot be made. Even if they hold their shape sufficiently to be removed from the spike forming equipment, such spikes cannot be driven into the soil without breaking, shattering and disintegrating.

The present invention alleviates the problems associated with the use of liquid pesticides for making slow, gradual controlled-release spikes.

We have now developed granular carriers which contain a liquid pesticide therein and which can be used to make spikes that can be driven into normal soil.

We have also developed spikes which include a liquid systemic pesticide but which are not excessively toxic at the surface, which can be handled by the user without creating health hazards and from which the liquid systemic pesticide is released gradually at a controlled rate.

In accordance with one aspect of the present invention, carrier granules which have liquid pesticide absorbed therein are treated to make them useful for making spikes that can be driven into the soil without significant shattering. The treatment comprises hardening the granules such as by coating them with a hardener.

In accordance with another aspect of the present invention, the treated granules are used to produce spikes that contain liquid pesticides and that retain their shape so that they can be removed from forming equipment, handled and driven into a normal soil without significant shattering or disintegrating. Additionally, the spikes made with the treated granules release pesticides in a gradual controlled manner and do not exhibit extreme toxicity at the surface which is generally present when liquid pesticides are used. The granules can also be mixed with fertilizers normally used in making spikes and the resulting mixture formed into an pesticide-fertilizer spike.

It has been discovered that spikes which retain their shape, which can be driven into a normal soil, and which to not exhibit dangerous toxicity at its surface can be made from liquid pesticides. The liquid pesticide is incorporated into carrier granules, such as clay granules, by a process known in the art. The pesticide containing carrier granules are hardened. The hardening of the granules can be accomplished by coating them with a polymer which is then hardened. In the preferred embodiment of the invention, the hardened granules are subsequently coated with a binder and used for making a spike. The process of making the spike from the hardened granules can be a conventional process, such as that disclosed in U.S. Patent No. 4,348,218 to Bond, incorporated herein by reference.

In its preferred form, the pesticide-carrying granules of the present invention are produced by first mixing a carrier into which a liquid pesticide has been absorbed with a thermosetting resinous hardiner in a reaction vessel. The particular pesticide and carrier employed are 15% disulfoton absorbed into an attapulgite-type clay. A prepared carrier and pesticide combination of this kind is available commercially from the Mobay Corporation under the name "Di-Syston." Of course, various other carrier/pesticide combinations will readily suggest themselves to one familiar with the art of the present invention. Similarly, although a 65% liquid urea-formaldehyde, available commercially as Borden type CR-16, may be used for a thermosetting hardener, the present invention should not be viewed as being limited to a hardener of that type.

In the preferred embodiment, a fertilizer-compatible cure catalyst, such as fertilizer grade ammonium sulfate, is added to the reaction vessel so as to catalyze the cure of the urea formaldehyde resin during the subsequent heating step. While such a catalyst is not essential to the present invention, and the use of the other non-toxic catalysts is possible, catalysis results in quicker onset of curing and shorter cure times.

Likewise, a fertilizer-compatible pH-reducing substance, such as fertilizer grade triple superphosphate, can be added to lower the pH of the resulting mixture and thereby maximize cure hardness of the urea formaldehyde resin. Of course, many other pH-reducing substances could be employed, so long as they are not toxic to the growing plants. It should also be noted that the use of both ammonium sulfate and triple superphosphate has the added advantage of providing nutrients to the soil adjacent to the plant upon the gradual dissolution of a pesticide briquette, which may be in the shape of a spike.

To obtain granules of a superior composition for use in producing pesticide briquettes, the preferred ratio by weight of 15% Di-Syston to 65% liquid urea-formaldehyde to ammonium sulfate to triple superphosphate in the mixture described above is 20 to 8 to 1 to 1, respectively. Ratios of Di-Syston to urea-formaldehyde of 20 to 12 and 20 to 4 produce satisfactory results, but 20 to 8 has been found to be superior.

After the above ingredients are in a reaction vessel, the mixture is heated to a temperature of between 90 to 110 °F, maintained at a temperature within that range, and agitated for 1.5 to 2 hours, or until the mixture appears dry, to initiate curing of the binder. The essence of this step is to sufficiently heat the mixture so as to initiate curing of the hardener and these temperature and time conditions are not particularly important to the present invention.

Finally, the coated granules are allowed to further cure in drums for more than 24 hours so that the granules become sufficiently hard to be used in the briquetting process.

- 6 -

0200288

After curing, the granules can be introduced into a briquetter and compressed with a binder by conventional means into a briquette of sufficient strength so that it can be hammered or otherwise driven into the ground. The binder used may be additional urea formaldehyde, or any suitable binder.

The granules can also be mixed by conventional means with a fertilizer ingredient, such as NPK source materials or other nutrients, as well as lubricants, before being introduced into the briquetter. In this embodiment, the hardened granules are combined with the fertilizer ingredient to form a substantially homogeneous combination of particles before introduction into the briquetter. After introduction into the briquetter. After briquetting, the binder is allowed to further cure and interbond, producing substantially shatter-resistant spikes.

Briquettes produced by this method have shown slow-release characteristics comparable to that of fertilizer briquettes. This slow release is due in part to the physical nature of briquette, and in part to the fact that the carrier particles containing the pesticide are covered with a hardener.

## CLAIMS:

1. A process for treating carrier granules containing a liquid pesticide to make them useful as an ingredient in preparing a pesticide spike which can be driven into the ground without significant shattering, which process comprises:

mixing a granular carrier containing a liquid pesticide absorbed therein with a hardener until the carrier is coated with the hardener to produce coated granules;

initiating hardening of the hardener; and

allowing the hardener to harden thereby to produce hardened coated granules.

2. A process as claimed in claim 1 wherein the hardener is urea formaldehyde.

3. A process as claimed in claim 1 or claim 2 wherein the insecticide comprises disulfoton.

4. A process as claimed in any one of the preceding claims wherein the carrier comprises an attapulgite-type clay.

5. A process as claimed in any one of the preceding claims which further comprises simultaneously agitating the mixture whilst heating it.

6. A method of producing pesticide-carrying granules useful as an ingredient in preparing a pesticide briquette, which comprises:

mixing a granular carrier into which a liquid pesticide has been absorbed, a partially liquid uncured thermosetting urea formaldehyde resinous hardener, a fertilizer-compatible cure catalyst, and a fertilizer-compatible pH-reducing substance until the carrier is coated with the hardener;

heating the resulting mixture to initate curing of the hardener; and

allowing the hardener to cure so as to produce hardened granules suitable for charging into the mold cavity of a briquetting machine.

7. A method as claimed in claim 6 wherein the cure catalyst comprises fertilizer grade ammonium sulfate.

8. A method as claimed in claim 6 or claim 7 wherein the pH-reducing substance comprises fertilizer grade triple superphosphate.

9. A method as claimed in claim 8 wherein the triple superphosphate is included in an amount sufficient to lower the pH of the mixture to maximise cure hardness of the urea formaldehyde.

10. A method as claimed in any one of claims 6 to 9 wherein after the mixture has been heated to initiate curing of the binder it is maintained at a temperature in the range of from $32^{\circ}$ to $43^{\circ}C$ ($90^{\circ}$ to $110^{\circ}F$) until it appears to be dry.

11. A method as claimed in claims 7 and 8 wherein the ratio by weight of the carrier to the hardener to the ammonium sulfate to the triple superphosphate is 20 to 8 to 1 to 1, respectively.

12. A method as claimed in any one of claims 6 to 11 which comprises:

combining the hardened granules with a fertilizer so as to form a substantially homogenous combination of particles;

introducing the combination into the mold cavity of a briquetting machine with a suitable binder to form a briquette mixture;

compacting the briquette mixture into a briquette having a shape which adapts it to be driven into the ground; and

allowing the binder to cure and interbond so as to harden the briquette to a substantially shatter-resistant strength.

13. Pesticide-carrying granules useful as an ingredient in preparing a pesticide briquette which comprise:

carrier particles into which a liquid pesticide has been absorbed;

a film of heat-cured resinous hardener substantially coating the particles and adapting them to be compressed into a reasonably shatter-resistant pesticide spike.

14. A pesticide-fertilizer briquette suitable for being driven into the ground without substantial shattering, which comprises:

a fertilizer;;

carrier particles into which a liquid pesticide has been absorbed;

a film of heat-cured resinous hardener substantially coating the carrier particles; and

a binder which binds the carrier particles to each other so as to trap the fertilizer between the carrier particles.

15. Graunles as claimed in claim 13 or a briqrette as claimed in claim 14 wherein the carrier particles are particles of an attapulgite-type clay.

16. Granules as claimed in claim 13 or a briquette as claimed in claim 14 wherein the pesticide is disulfuton.

17. Granules as claimed in claim 13 or a briquette as claimed in claim 14 wherein the hardener, or the hardener and binder, comprise urea formaldehyde.